# EUROPEAN PATENT SPECIFICATION

(11) **EP 0 731 309 B1**
(45) Date of publication and mention of the grant of the patent: **06.06.2001**
(21) Application number: 95103310.9
(22) Date of filing: 08.03.1995
(51) Int. Cl.: F16L 37/00, F16L 37/24

(54) **Insertion-connected component for refrigerators, freezers and the like**
Steckverbinder für Kühl-Gefrierschränke und dergleichen
Connecteur à insertion pour réfrigérateurs, congélateurs et similaires

(43) Date of publication of application: 11.09.1996
(73) Proprietor: WHIRLPOOL EUROPE B.V., 5507 SK Veldhoven (NL)
(72) Inventor: De Caprio, Salvatore, c/o Whirlpool Italia s.r.l., I-21024 Biandronno (VA) (IT); Pelizzari, Armando, c/o Whirlpool Italia s.r.l., I-21024 Biandronno (VA) (IT)
(74) Representative: Guerci, Alessandro

(56) References cited:
- WO-A-91/00707
- US-A- 4 123 093

## Description

This invention relates to refrigerators, freezers and like appliances having tubular-type components which are used in such appliances for conveying air, for the passage of cables, leads and tubes, and for supporting electrically powered parts.

With particular but not exclusive reference to one class of such components, namely the air intake and feed port in refrigerators and the like of the type comprising insulation expanded in situ between the outer housing and the inner liner and in which the cooling vehicle is a forced air stream, it is known to connect these to the refrigerator interior, before injecting the expandable insulation material, by snap-fitting (by pressing), providing for this purpose on the periphery of the relative port (or mouth) projections with an inclined surface which snap beyond the appropriate aperture provided in said interior, to hence fix the component. A connection of this kind is disclosed in US-A-4123093 but for completely different purposes (for connecting conduits to ductboard and other wall members).

Such a snap-connection, especially if executed clumsily, can damage or deform the contour of the aperture to which the port is fitted. In addition such a known connection system does not provide total sealing against the expanded material, as shown by the seepages of expanded material which occur relatively frequently towards the port (and into the relative duct) and into the refrigerator interior. Moreover because of the small thickness of the connection wall, such a connection requires the provision of backing means to prevent local deformation or unreliable coupling.

The main object of the present invention is therefore to form those components of tubular type for refrigerators, freezers and the like intended for the aforesaid functions, in such a manner that they allow more reliable and clean connection to their supporting structure without this suffering damage and without leakages of expanded material occurring because of sealing defects and moreover, just as important, without moisture being able to penetrate into the expanded material with its consequent brittling.

This and further objects which will be more apparent from the detailed description given hereinafter are attained by a component of tubular type to be connected to a supporting structure at an aperture therein, the inventive aspects of which are defined in the accompanying claims.

The invention will be more apparent from the detailed description thereof given hereinafter by way of non-limiting example with reference to the accompanying drawings, in which:
Figure 1 is a perspective view of a tubular component according to the invention, the component representing a port;
Figures 2 and 2A show schematically the two positions assumed by the component, namely before and respectively after its connection to an aperture in the inner liner of the refrigerator;
Figure 3 is an enlarged front view of the connection part; and
Figures 4 and 5 are two sections taken respectively on the lines IV-IV and V-V of Figure 3.

With reference to the figures, the component 1 shown therein is of tubular type, in the sense that it defines a conduit 2 which in this specific case is of elbow type, but can be of a different shape such as of rectilinear or arcuate axis and be of any cross- section. The conduit opens at 3 at that end thereof which for ease of description will be known as the "connection head" and is indicated by 4.

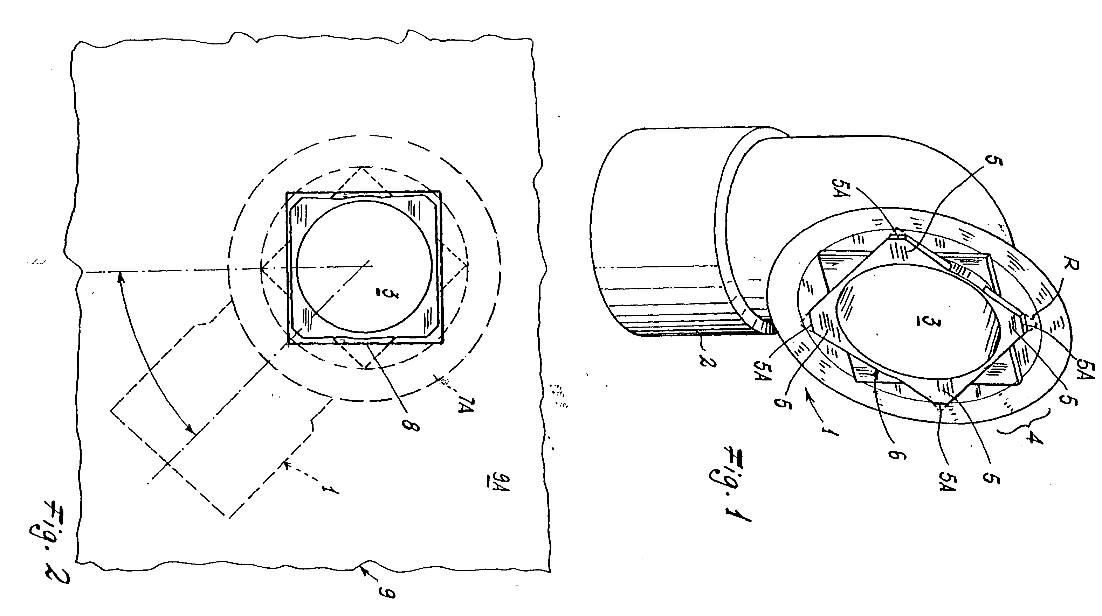

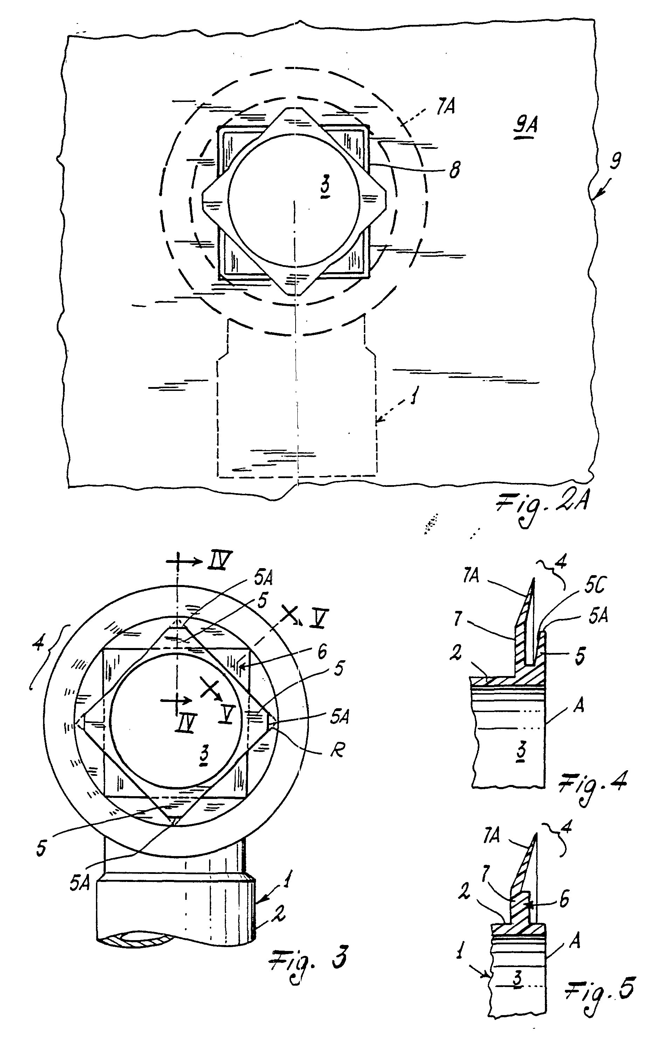

In the stated order, starting from its front surface A (see Figures 4 and 5), the connection head 4 comprises four lugs 5 spaced angularly equidistant apart about the port 3, they being in plan view substantially triangular with their vertex chamfered, their overall envelope being represented by a square R (shown in Figure 3 as a square with dashed-line corners). As can be seen from Figure 4, the cross-section through these lugs decreases towards their chamfered vertex 5A, such that the cross-section can be defined as wedge-shaped. In the head 4 there then follows a step 6 of substantially square contour, this square being offset angularly through 45° from the square R defined by the lugs 5, as is clear from Figures 1 and 3 in particular.

There finally follows in the head 4 a circular flange 7 from which the said step 6 rises. The circular flange 7 has a flexible frusto-conically tapering rim 7A acting as a seal lip, the major base of which faces the surface A. The axial extension of the seal lip 7A is such as to provide sealing and counteracting cooperation along the contour of a square hole 8 (Figure 2) in the structure 9 to which the component is to be connected by means of the head 4. Specifically, the hole 8 is provided in a flat wall 9A of the structure 9, its sides being approximately equal to those of the enveloping square R and of the square formed by the step 6.

Figures 2 and 2A show the fitting to the structure 9 by means of the connection which the head 4 forms with the contour of the hole 8. Figures 2 and 2A show the component 1 positioned behind the flat wall 9A.

From the rear of this wall, the operator applies the component 1 such that (Figure 2) the lugs 5 enter the aperture 8, while the vertices of the step 6 halt against the rear face of the wall 9A. The seal lip 7A adheres to this face entirely about the aperture 8. The operator rotates the component 1 through 45° to bring it into the position shown in Figure 2A in which the lugs 5 lie against the front face of the wall 9A and the square step 6 lies within the aperture 8. During this rotation the rear inclined side 5C of the lugs 5 allows the lip 7A, by cooperation with the front face of the wall 9, to progressively deform elastically against the rear face of the wall 9A, until the step 6 becomes snap-inserted into the square aperture 8. By the effect of this and of the elastic thrust exerted on the opposite side by the lip 7, the component 1 remains locked in situ and sealed both against the expanded material during the cabinet injection and against moisture during normal operation of the appliance.

The number and shape of the lugs 5 and the configuration of the hole 8 and hence of the corresponding step can be different, for example triangular, polygonal etc., without leaving the scope of the present claims.

## Claims

1. A refrigerator, freezer or like appliance having a component of tubular type for connection to an aperture (8) in a wall (9A) of said refrigerator, freezer or like appliance, characterised in that said component comprises at one end (3) a flange (7) with an elastically deformable seal lip (7A), from said flange (7) there axially projecting a step (6), to the front of which there are provided angularly equidistant engagement lugs (5, 5A), such that when the connection has been made by rotating the component (1) these lugs engage the wall (9A) on the opposite side thereof to that against which the seal lip (7A) rests, the shape of the aperture (8) in the wall (9A) substantially matching the shape of the lugs (5, 5A).

2. A refrigerator as claimed in claim 1, characterised in that the lugs (5) are four in number and define a square (R), the step (6) also having a square contour substantially equal to the preceding (R) but offset by 45° therefrom, the aperture (8) also being square.

3. A refrigerator as claimed in the preceding claims, characterised in that the lugs (5) are substantially triangular in plan view with their vertex chamfered, and are of decreasing cross-section towards their outer ends.

## Patentansprüche

1. Kühl-, Gefrier- oder ähnliches Gerät mit einem rohrförmigen Bauteil zum Verbinden mit einer Öffnung (8) in einer Wand (9A) des Geräts,
dadurch gekennzeichnet,
dass das Bauteil (1) an seinem einen Ende (3) einen Flansch (7) mit einer elastisch verformbaren Dichtlippe (7A) aufweist, dass von diesem Flansch (7) eine Stufe (6) axial vorspringt und dass auf der Vorderseite dieser Stufe im gleichen Winkelabstand angeordnete Eingriffsnasen (5, 5A) derart vorgesehen sind, dass diese Eingriffsnasen nach der durch Drehen des Bauteils vorgenommenen Verbindung in die Wand (9A) auf derjenigen Wandseite eingreifen, die entgegengesetzt zu derjenigen Wandseite liegt, auf der die Dichtlippe (7A) ruht, wobei die Form der Öffnung (8) in der Wand (9A) im Wesentlichen an die Form der Eingriffsnasen (5, 5A) angepasst ist.

2. Kühlgerät nach Anspruch 1,
dadurch gekennzeichnet,
dass vier im Quadrat (R) angeordnete Eingriffsnasen (5) vorgesehen sind, dass die Stufe (6) ebenfalls einen dem Quadrat der Eingriffsnasen im Wesentlichen entsprechenden quadratischen Umriss aufweist, der jedoch gegenüber dem Eingriffsnasenquadrat um 45° versetzt ist, und dass die Öffnung (8) ebenfalls quadratisch ist.

3. Kühlgerät nach Anspruch 1 oder 2,
dadurch gekennzeichnet,
dass die Eingriffsnasen (5) in Draufsicht im Wesentlichen Dreiecke bilden, deren Scheitel gebrochen sind, und in Richtung ihrer Außenenden einen abnehmenden Querschnitt aufweisen.

## Revendications

1. Réfrigérateur, congélateur ou appareil analogue possédant un élément de type tubulaire destiné à être raccordé à une ouverture (8) d'une paroi (9A) du réfrigérateur, congélateur ou appareil analogue, caractérisé en ce que l'élément comprend, à une première extrémité (3), une bride (7) possédant une lèvre d'étanchéité élastiquement déformable (7A), un gradin (6) dépassant axialement de la bride (7), des pattes équidistantes angulairement de coopération (5, 5A) étant placées à l'avant du gradin, si bien que, lorsque le raccordement a été réalisé par rotation de l'élément (1), ces pattes coopèrent avec la paroi (9A) du côté opposé à celui contre lequel est en appui la lèvre d'étanchéité (7A), la configuration de l'ouverture (8) formée dans la paroi (9A) correspondant pratiquement à la configuration des pattes (5, 5A).

2. Réfrigérateur selon la revendication 1, caractérisé en ce que les pattes (5) sont au nombre de quatre et délimitent un carré (R), le gradin (6) ayant aussi un profil carré pratiquement égal au précédent profil (R) mais décalé de 45° par rapport à celui-ci, l'ouverture (8) étant aussi carrée.

3. Réfrigérateur selon l'une quelconque des revendications précédentes, caractérisé en ce que les pattes (5) ont une forme pratiquement triangulaire en plan dont le sommet est chanfreiné, et ont une section qui diminue vers leur extrémité externe.
